# EUROPEAN PATENT SPECIFICATION

(11) **EP 0 535 888 B1**
(45) Date of publication and mention of the grant of the patent: **24.07.1996**
(21) Application number: 92308807.4
(22) Date of filing: 28.09.1992
(51) Int. Cl.: B23K 20/12, F01L 3/02, C22C 14/00

(54) **Method for manufacturing a friction - welded valve**
Verfahren zum Herstellen eines reibungsverschweissten Ventils
Méthode de fabrication d'une soupape par soudage par friction

(30) Priority: 28.09.1991 JP 320136/91
(43) Date of publication of application: 07.04.1993
(73) Proprietor: DAIDO TOKUSHUKO KABUSHIKI KAISHA, Naka-ku Nagoya-shi Aichi-ken (JP); NITTAN VALVE CO., LTD., Chuo-ku, Tokyo 104 (JP); NZK CO., LTD, Tokyo (JP)
(72) Inventor: Imamura, Motoaki, Kani-shi, Gifu (JP); Matsuda, Tsunekazu, Zushi-shi, Kanagawa (JP); Okuyama, Kazumi, Hatano-shi, Kanagawa (JP)
(74) Representative: Calamita, Roberto

(56) References cited:
- EP-A- 0 235 879
- EP-A- 0 438 164
- US-A- 4 552 609
- PATENT ABSTRACTS OF JAPAN vol. 14, no. 284 (C-730)20 June 1990 & JP-A-20 88 738 (MITSUBISHI HEAVY IND LTD) 28 March 1990
- PATENT ABSTRACTS OF JAPAN vol. 14, no. 17 (C-675)16 January 1990 & JP-A-12 59 140 (HITACHI METALS LTD) 16 October 1989

## Description

The present invention relates to a method for manufacturing a friction-welded valve, and more particularly, to a method for manufacturing a friction-welded valve having a stem a diameter of 40 mm or more at its joint portion and adapted for use in a large-sized marine diesel engine.

With the development of high-speed, large-sized vessels, valves of a diesel engine for use as their main engine have started to be used under severer working conditions. These valves are expected to be improved in corrosion resistance, wear resistance, and high temperature strength.

Conventional valves of this type include one which is integrally formed of a nickel-based heat-resisting alloy called Nimonic 80A (see, for example, "MWH Nimonic valves: Able to cope with extreme situations" in Maritime Industry No. 4, August/September 1990), one in which a seating region of a valve head formed of a heat-resisting steel is welded with a Stellite alloy, one in which a head surface is welded with Inconel 625, a composite valve in which powder of the Nimonic 80A is bonded to the face and head surface by the hot isostatic pressing method (HIP), etc. Also known is a composite valve which is formed by friction-welding a head portion and a stem portion of different materials, e.g., a head portion formed of the Nimonic 80A and a stem portion formed of a heat-resisting steel called SUH3.

Among these valves, the one which is integrally formed of the Nimonic 80A is superior to the others in the corrosion resistance, wear resistance, and high temperature strength, and are observed as the so-called maintenance-free valves which hardly require repair during their requisite valve lifetime.

If the valves are integrally formed of the super alloy as aforesaid, however, the material cost is comparatively high. Accordingly, it is believed to be the best method of obtaining a friction-welded valve to form only the head portion, which is exposed to high temperature, from the Nimonic 80A and use an inexpensive heat-resisting steel for the stem portion. In manufacturing this friction-welded valve, the head and stem portions are relatively rotated under a first pressure P1, and a joint portion is heated by means of frictional heat generated by the rotation. Thereafter, the rotation is stopped, and the head and stem portions are upset to weld by means of a second pressure P2.

According to the conventional method in which the head portion of the Nimonic 80A and the stem portion of the heat-resisting steel are friction-welded to each other, however, only small-sized friction-welded valves having a stem diameter of about 40 mm or less at the joint portion can be manufactured for practical use. For large-sized valves with a stem diameter of 40 mm or more, no reliable manufacturing method has been established yet, in view of the coupling capability of the joint portion.

The friction-welded valves with a stem diameter of 60 mm or more cannot enjoy a satisfactory coupling capability for the following reasons. If the Nimonic 80A, which contains substantial amount of active metals such as titanium and aluminum, is exposed to high temperature, it is oxidized or nitrided, so that the joint interface is liable to be contaminated. Further, titanium carbide (TiC) precipitates out in the form of a film on the joint interface, so that cracks can easily propagate through the joint interface, resulting in a joint fracture.

The aforesaid trend toward the contamination of the joint interface is developed more markedly by larger-sized friction-welded valves which are more liable to unevenness of heating in the heating stage during the manufacture of the valves. More specifically, the rotating speed of the central portion of the stem of a large-sized valve is substantially different from that of the peripheral portion at the joint, so that heat is generated unevenly by frictional heating, thus entailing nonuniform temperature distributions inside and outside the joint interface.

An object of the present invention is to provide a method for manufacturing a friction-welded valve, in which a composite valve manufactured by friction-welding a head portion of a nickel-based alloy, such as Nimonic 80A, and a stem portion of a heat-resisting steel has a large diameter of >40 mm, preferably 50 mm or more, and further preferably 60 mm or more, and a joint portion, which enjoys a high-temperature strength property equal to or higher than that of the base material, is free from fracture, so that the resulting valve is reliable and large-sized.

Another object of the present invention is to provide a method for manufacturing a friction-welded valve, in which a pipe of a heat-resisting steel is used as a stem portion, so that the resulting valve is lightweight as a whole, and the hollow of the stem portion can be loaded with a cooling medium, which can generate an outstanding cooling effect.

According to an aspect of the present invention, there is provided a method for manufacturing a friction-welded valve, which comprises the following steps of procedure. A head portion, formed of a nickel-based alloy containing 0.20% or less of carbon, 18 to 30% of chromium, 0.5 to 2.5% of aluminum, and 1.0 to 3.0% of titanium, all by weight, as essential components, and a solid stem portion, formed of a heat-resisting steel containing 0.5% or less of carbon and 10 to 30% of chromium, both by weight, as essential components, and having an outside diameter of >40 mm are relatively rotated under a first pressure P1, and a joint portion is heated by means of frictional heat generated by the rotation so that the margin for plastic conversion becomes 5 mm or more. After their relative rotation is stopped, the head portion and the stem portion are pressed and upset by means of a second pressure P2 so that the margin for plastic conversion becomes 2 mm or more. The first pressure P1, the second pressure P2, and the ratio P2/P1 of the second pressure P2 to the first pressure P1 are set at 39.22 MPa (4 kgf/mm²) or more, 137.29 MPa (14 kgf/mm²) or more, and 1.25 or more, respectively.

According to another aspect of the present invention, a head portion, formed of a nickel-based alloy containing 0.20% or less of carbon, 18 to 30% of chromium, 0.5 to 2.5% of aluminum, and 1.0 to 3.0% of titanium, all by weight, as essential components, and a pipe-shaped stem portion, formed of a heat-resisting steel containing 0.5% or less of carbon and 10 to 30% of chromium, both by weight, as essential components, and having an outside diameter of >40 mm are relatively rotated under a first pressure P1, and a joint portion is heated by means of frictional heat generated by the rotation so that the margin for plastic conversion becomes 3 mm or more. After their relative rotation is stopped, the head portion and the stem portion are pressed and upset by means of a second pressure P2 so that the margin for plastic conversion becomes 2 mm or more. The ratio of the wall thickness to the outside diameter of the pipe-shaped stem portion ranges from 0.1 to 0.3. The first pressure P1, the second pressure P2, and the ratio P2/P1 of the second pressure P2 to the first pressure P1 are set at 39.22 MPa (4 kgf/mm²) or more, 98.06 MPa (10 kgf/mm²) or more, and 1.10 or more, respectively.

In the accompanying drawings :

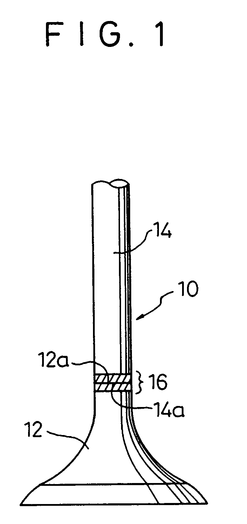

Fig. 1 is a plan view showing components of a valve manufactured by a method according to the present invention.

In a method according to the present invention, the aforementioned friction welding conditions are applied to a head portion, which is formed of the nickel-based alloy of the aforesaid composition, and a stem portion, which is formed of the heat-resisting steel of the aforesaid composition.

The nickel-based alloy used for the head portion contains nickel as its balance component. In this nickel-based alloy, carbon is a component which serves to refine the crystalline grains and to strengthen the grain boundary. The carbon content is set at 0.20% or less, preferably 0.10% or less, by weight. If the carbon content is too high, the hot workability is damaged and the toughness at normal and high temperatures lowers.

Chromium is a component which serves to improve the oxidation resistance and corrosion resistance. The chromium content is set within the range from 18 to 30%, preferably from 19 to 22%, by weight. If it is too low, wastage due to oxidation and corrosion progresses in a short time. If the chromium content is too high, the hot workability is ruined, and the alloy is liable to become brittle when in use at high temperature because the structural stability lowers.

Aluminum is a component which produces an intermetallic compound when combined with nickel and titanium, and serves to increase the strength due to precipitation of the compound. If the aluminum content is lower than 0.5% by weight, the intermetallic compound of aluminum and nickel becomes unstable, lowering the strength and toughness. If the aluminum content is higher than 2.5% by weight, the hot workability is damaged. Therefore, the aluminum content is set within the range from 0.5 to 2.5%, preferably from 1.5 to 2.0%, by weight.

Titanium is a component which serves to increase the strength due to precipitation of an intermetallic compound produced by a combination of titanium, aluminum and nickel. If the titanium content is lower than 1.0% by weight, sufficient hardness is not obtained by the precipitation of the intermetallic compound, and thus the strength at high temperature fails to achieve a satisfactory level. If the titanium content is higher than 3.0% by weight, the hot workability is ruined and the toughness in the normal- to high-temperature range lowers. Therefore, the titanium content is set within the range from 1.0 to 3.0%, preferably from 2.0 to 2.5%, by weight.

The elements described above are essential components of the nickel-based alloy for the head portion used according to the present invention. If necessary, at least one of elements including cobalt, niobium, tungsten, molybdenum, and iron may be further contained in this alloy. Among these optional components, cobalt serves to strengthen the base material by means of solid solution, and the strength at high temperature can be increased by raising the solution temperature of the intermetallic compounds of nickel-aluminum and nickel-titanium. If, however, the cobalt content is too high, the high-temperature strength lowers and the cost is increased. Thus, the cobalt content is set at 22% or less, preferably 20% or less, by weight. Further, part of niobium serves to strengthen the base material, while at the same time, it produces an intermetallic compound when combined with nickel, like aluminum and titanium, thereby increasing the strength due to separating of the compound. If, however, the niobium content is higher than 7% by weight, the low-melting compound phase increases, thus damaging the hot workability, and the toughness in the normal- to high-temperature range lowers. Thus, the niobium content is restricted to 7% or less, preferably 5% or less, by weight.

Molybdenum and tungsten are effective components which improve the strength at normal and high temperatures as they produce solid solution with the base material. If the contents of these components are too high, however, the hot workability is ruined and the toughness in the normal- to high-temperature range lowers. Thus, the contents of molybdenum and tungsten should individually be set at 7% or less, preferably 5% or less, by weight.

Iron is a component which serves to improve the hot workability. The iron content is restricted to 20% or less, preferably 18% or less, by weight, because if it is too high, the high-temperature strength is not retained for a long term.

This head portion is manufactured by processing a block material of the aforesaid nickel-based alloy. In doing this, the nickel-based alloy of the aforesaid composition is once heated up to solution heat temperature, and a temperature of the heated nickel-based alloy is lowered, thereafter, the nickel-based alloy is further subjected to hot-cold processing at a processing rate of 10 to 75% and a temperature of, e.g., 850 to 1,100°C which is not higher than the recrystallization temperature of the alloy. The resulting head portion is a satisfactory structure, having a stable reinforced texture and enjoying improved high-temperature hardness and creep rupture strength.

In the heat-resisting steel which constitutes the stem portion, on the other hand, carbon is a component which serves to strengthen the intergranular structure and the grain boundary. The carbon content is set at 0.5% or less, preferably 0.3% or less, by weight. If it is too high, the hot workability is damaged, and the normal- and high-temperature toughness lowers.

Chromium is a component which serves to improve the oxidation resistance and corrosion resistance. If the chromium content is lower than 10% by weight, wastage due to oxidation or corrosion progresses in a short time, and if it is higher than 30% by weight, the structural stability becomes low, thus spoiling the hot workability, and the toughness lowers. Thus, the chromium content is set within the range from 10 to 30% by weight. Preferably, for heat-resisting austenitic steel, the chromium content is set within the range from 19 to 22% by weight, and for heat-resisting martensitic steel, from 11 to 13% by weight.

The heat-resisting steel for the stem portion contains iron as its balance component and the above-described elements as its essential components. If necessary, at least one of elements including molybdenum, nickel, tungsten, and niobium may be further contained in this steel. Among these optional components, molybdenum and tungsten contribute to strengthening the base material by means of solid solution. If, however, the contents of these components are too high, the hot workability is ruined and the toughness lowers. Thus, the contents of molybdenum and tungsten are individually restricted to 2% or less, preferably 1.5% or less, by weight.

In the case of heat-resisting austenitic steel, nickel serves to improve the structural stability and thus the high-temperature strength, and in the case of heat-resisting martensitic steel, it serves to improve the hardenability, thereby increasing the strength and toughness. For the heat-resisting austenitic steel, the nickel content must be 8% or more by weight in order to achieve improved stability of the austenitic structure. If, however, the nickel content is higher than 18% by weight, the cost increases, and thus it is restricted to 18% or less by weight. In the case of the heat-resisting martensitic steel, softening of the steel progresses in a short time if the nickel content is higher than 2% by weight. Therefore, the nickel content is restricted to 2% or less by weight.

Niobium serves to strengthen the base material, while part thereof forms a carbide which is then dispersed, eventually serving to strengthen the base material. The niobium content is restricted to 2% or less, preferably 1.5% or less, by weight. If it is higher than 2% by weight, the toughness of the heat-resisting steel lowers.

In the method according to the present invention, the head portion formed of the nickel-based alloy of the aforesaid composition and the stem portion formed of the heat-resisting steel of the aforesaid composition are friction-welded, whereupon a friction-welded valve having a stem diameter of 60 mm or more at the joint portion is manufactured.

If the stem portion to be bonded to the head portion is a solid body, satisfactory coupling properties of the joint portion can be obtained only after undergoing the following steps of procedure. A first pressure P1, applied to the head and stem portions when they are pressed and heated by means of the resulting frictional heat, is first set at 39.22 MPa (4 kgf/mm²) or more, preferably at 78.45 (8 kgf/mm)² or more. Then, the head and stem portions are relatively rotated under the first pressure P1, and the joint portion is heated by means of the frictional force so that a margin u1 for plastic conversion becomes 5 mm or more, preferably 10 mm or more. In heating the joint portion in this manner, oxides or nitrides of titanium and aluminum on the joint interface contaminated during the heating step are pushed out by means of the first pressure P1 so that a softened region of a proper thickness is formed at the joint portion.

If the first pressure P1 for heating is too low, the heating time is so long that the temperature at the joint interface becomes high. In some cases, therefore, local fusion may be caused between the crystalline grains of the head or stem portion, or eutectic crystals may be generated around carbides or the like, bringing about a joint defect. If the first pressure P1 is too high, on the other hand, the softened region is excessively pushed out, so that it becomes thinner. Accordingly, a margin u2 for plastic conversion in a succeeding upsetting stage cannot be large enough to ensure satisfactory bonding strength. Thus, the first pressure P1 is set at a suitable value greater than or equal to the aforesaid lower limit value such that the margins u1 and u2 for plastic conversion can be obtained in the heating and upsetting stages, respectively.

In general, the larger the diameter of the stem portion, the longer the heating time t1 for the heating stage is. If the heating time t1 is too short, the softened region becomes thinner, so that the margin u2 for plastic conversion for upsetting cannot be large enough to ensure satisfactory bonding strength. Accordingly, the heating time t1 for the heating stage is set in accordance with the diameter of the stem portion. In any case, the joint portion is heated so that the margin u1 for plastic conversion becomes 5 mm or more.

In the upsetting stage, the relative rotation of the head and stem portions is stopped. Thereafter, a second pressure P2 is set at 137.29 MPa (14 kgf/mm²) or more, preferably 98.06 MPa (10 kgf/mm²) or more, and the ratio P2/P1 of the second pressure to the first one is set at 1.25 or more, preferably 1.5 or more. Then, the head and stem portions are upset so that the margin u2 for plastic conversion is 2 mm or more, preferably 5 mm or more.

If the second pressure P2 is too low, there remains a heated region where the margin for plastic conversion is not large enough, so that the bonding strength is lowered. This plastic conversion for upsetting is the so-called creep deformation which progresses with the passage of time under constant pressure. The larger the diameter of the stem portion, the longer the time t2 for the upsetting stage should be. If this upsetting time t2 is too short, the partially melted region solidifies as it is, without being pushed out, so that the bonding strength is ruined. Since the upsetting time t2 varies depending on the diameter of the stem portion, it is concluded without regard to the time t2 that necessary plastic conversion (upsetting work) is finished when the aforesaid predetermined value is exceeded by the margin u2 for plastic conversion.

In order to obtain the predetermined value for the margin u2 for plastic coriversion, the softened region of the proper thickness should be formed in the heating stage, as mentioned before. If the first pressure P1 is great, the softened region becomes thinner, so that the second pressure P2 for upsetting should be set at a value proportional to that of the first pressure P1. if the ratio P2/P1 between the two pressures is lower than 1.25, the margin u2 for plastic conversion required in the process of upsetting cannot be obtained.

If a heat-resisting steel pipe is used for the stem portion, a thick-walled portion of the pipe is friction-welded to the head portion, thereby forming a joint portion. The pipe used in this case has an outside diameter of 40 mm or more and is shaped so that the ratio (T/D) of its wall thickness (T mm) to its outside diameter (D mm) ranges from 0.1 to 0.3.

If the ratio T/D of the pipe is lower than 0.1, a load that can be applied to the joint portion is limited, and the pipe cannot be used for large-sized valves. If the ratio T/D of the pipe is higher than 0.3, on the other hand, the frictional heat becomes uneven due to the difference in rotational speed between the center side of the thick-walled portion and the periphery side causes. Thus, the joint portion (thick-walled portion of the pipe) is heated unevenly, so that high bonding strength cannot be obtained with reliability.

In order to obtain satisfactory coupling properties at the joint portion with use of the head portion and the pipe-shaped stem portion, the first pressure P1 for the heating stage is first set at 39.22 MPa (4 kgf/mm²) or more, preferably 78.45 (8 kgf/mm²) or more. Then, the head and stem portions are relatively rotated under the first pressure P1, and the joint portion is heated by means of the frictional force so that the margin u1 for plastic conversion is 2 mm or more, preferably 3 mm or more. By subjecting the joint portion to this heat treatment, as in the case of the solid stem portion, oxides or nitrides of titanium and aluminum on the joint interface contaminated during the heating step are pushed out so that a softened region of a proper thickness is formed at the joint portion.

If the first pressure P1 for heating is too low, as in the case of the solid stem portion, the heating time is so long that the interface temperature becomes high. In some cases, therefore, local fusion may be caused between the crystalline grains of the head portion or the pipe-shaped stem portion, or eutectic crystals may be generated around carbides or the like, bringing about a joint defect. If the first pressure P1 is too high, on the other hand, the softened region is pushed out, so that it becomes thinner. Accordingly, the margin u2 for plastic conversion in the succeeding upsetting stage cannot be large enough to ensure satisfactory bonding strength. Thus, the first pressure P1 is set at a suitable value greater than or equal to the aforesaid lower limit value such that the margins u1 and u2 for plastic conversion can be obtained in the heating and upsetting stages, respectively.

In general, the higher the ratio T/D, the longer the heating time t1 for the heating stage is. If the heating time t1 is too short, as in the case of the solid stem portion, the softened region becomes thinner, so that the margin u2 for plastic conversion for upsetting cannot be large enough to ensure satisfactory bonding strength. Accordingly, the heating time t1 for the heating stage is set in accordance with the ratio T/D. In any case, the joint portion is heated so that the margin u1 for plastic conversion becomes 3 mm or more.

In the upsetting stage, the relative rotation of the head and stem portions is stopped. Thereafter, the second pressure P2 is set at 98.06 MPa (10 kgf/mm²) or more, preferably 137.29 MPa (14 kgf/mm²) or more, and the ratio P2/P1 of the second pressure to the first one is set at 1.10 or more, preferably 1.20 or more. Then, the head and stem portions are upset so that the margin u2 for plastic conversion is 2 mm or more, preferably 3 mm or more.

If the second pressure P2 is too low, there remains a heated region where the margin for plastic conversion is not large enough, so that the bonding strength is lowered. The higher the ratio T/D, the longer the time t2 for the upsetting stage should be. If this upsetting time t2 is too short, the partially melted region solidifies as it is, without being pushed out, so that the bonding strength is ruined. Since the upsetting time t2 varies depending on the ratio T/D, it is concluded without regard to the time t2 that necessary plastic conversion (upsetting work) for the formation of the pipe-shaped stem portion is finished when the aforesaid predetermined value is exceeded by the margin u2 for plastic conversion.

In order to obtain the proper value for the margin u2 for plastic conversion, the softened region of the proper thickness should be formed in the heating stage, as mentioned before. If the first pressure P1 is great, the softened region becomes thinner, so that the second pressure P2 for upsetting should be set at a value proportional to that of the first pressure P1, as in the case of the solid stem portion. If the ratio P2/P1 between the two pressures is lower than 1.10, the margin u2 for plastic conversion required in the process of upsetting cannot be obtained.

The friction welding conditions for preparing the pipe-shaped stem are looser than those for preparing the solid stem, because the friction-welding area is smaller, whereby a friction-welding machine with lower capacity can be used.

Whether the stem portion is solid or pipe-shaped, the respective end faces of the head and stem portions to be friction-welded should have a required perpendicularity to their respective axes, which have to be in alignment with each other with a predetermined tolerance during the friction welding operation. It is to be understood, moreover, that each end face should have a required finished surface roughness.

If segregations or inclusions, such as sulfides, exist near the interface of each material, local fusion is caused there when the temperature of the joint interface nearly reaches the melting point of the material during the frictional heating process. The local fusion develops into a crack under stress at the time of friction welding. If no crack is caused, a substantial fiber flow may be caused, and the toughness with respect to the direction perpendicular to !he fiber flow may possibly be lowered reasonably. Therefore, the materials for the head and stem portions should be subject to as little segregations or inclusions, such as sulfides, as possible.

Segregations can be considerably reduced by the isothermal treatment and hot processing to the ingot. Although the form of sulfides or other inclusions can be changed by hot processing, however, the amount of precipitate cannot be changed much. In order to obtain a reliable friction-welded coupling, therefore, the amounts of impurities in the materials of the head and stem portion, which may cause the production of the inclusions, should preferably be minimized.

Both the nickel-based alloy of the head portion and the heat-resisting steel of the stem portion inevitably contain impurities besides the aforesaid essential and optional components.

It was found that if the nickel-based alloy of the head portion contains much impurities, such as phosphorus, sulfur, silicon, etc., for example, the strength of the joint portion lowers. In the case where the impurities are phosphorus and sulfur, they accumulate between the crystalline grains and lower the melting point of the regions of accumulation. Silicon produces a low-melting compound in conjunction with some other component. If the friction welding is carried out in this state, therefore, local fusion is caused at the interface of the head portion, so that the strength of the joint portion is lowered due to friction welding failure.

According to the present invention, therefore, the impurities contained in the nickel-based alloy of the head portion should preferably be restricted to 0.010% or less of phosphorus, 0.005% or less, more preferably 0.003% or less, of sulfur, and 0.20% or less of silicon, all by weight.

The heat-resisting steel which constitutes the stem portion is similarly influenced by impurities. Thus, the impurities contained in the heat-resisting steel of the stem portion should preferably be restricted to 0.050% or less of phosphorus, and 0.01% or less, still preferably 0.005% or less, of sulfur, both by weight.

According to the present invention,-moreover, a contaminated layer at the joint portion interface is removed under sufficiently high pressure, and the friction welding conditions are adjusted so that no local fusion can be caused.

Preferably, in the case of the solid stem portion, for example, P1, P2, u1 and u2 are set at values not lower than the aforementioned fixed values, individually, and as far as P2/P1 is concerned, if the value is set at a too greater value, extensiveness of the joint portion lowers. In view of such the circumstances, P2/P1 is restricted within the range from 1.25 to 3.5, or u2 is restricted within the range from 5 to 20 mm. In the case of the pipe-shaped stem portion, on the other hand, P1, P2, u1 and u2 are set at values not lower than the aforementioned fixed values, individually, and on the basis of the same reason as the solid stem portion, P2/P1 is restricted within the range from 1.20 to 3.0, or u2 is restricted within the range from 3 to 15 mm.

### [Embodiment 1]

The following is a description of an embodiment of the method according to the present invention and a comparative example as a control.

Fig. 1 shows a configuration of a large-sized valve 10 which is adapted for use in a marine diesel engine. The valve 10 comprises a head portion 12 of a nickel-based heat-resisting alloy and a solid stem portion 14 of a heat-resisting steel. The valve 10 is formed by friction-welding an end face 12a of the head portion 12 and an end face 14a of the stem portion 14 to each other at a joint portion 16 (hatched region of Fig. 1), and then finishing the periphery of the joint portion by machining.

Materials of the compositions shown in Table 1 were used for the head and stem portions. The materials of the head portion are subjected to hot-cold work at a temperature of 1050°C and a forging rate of 60%.

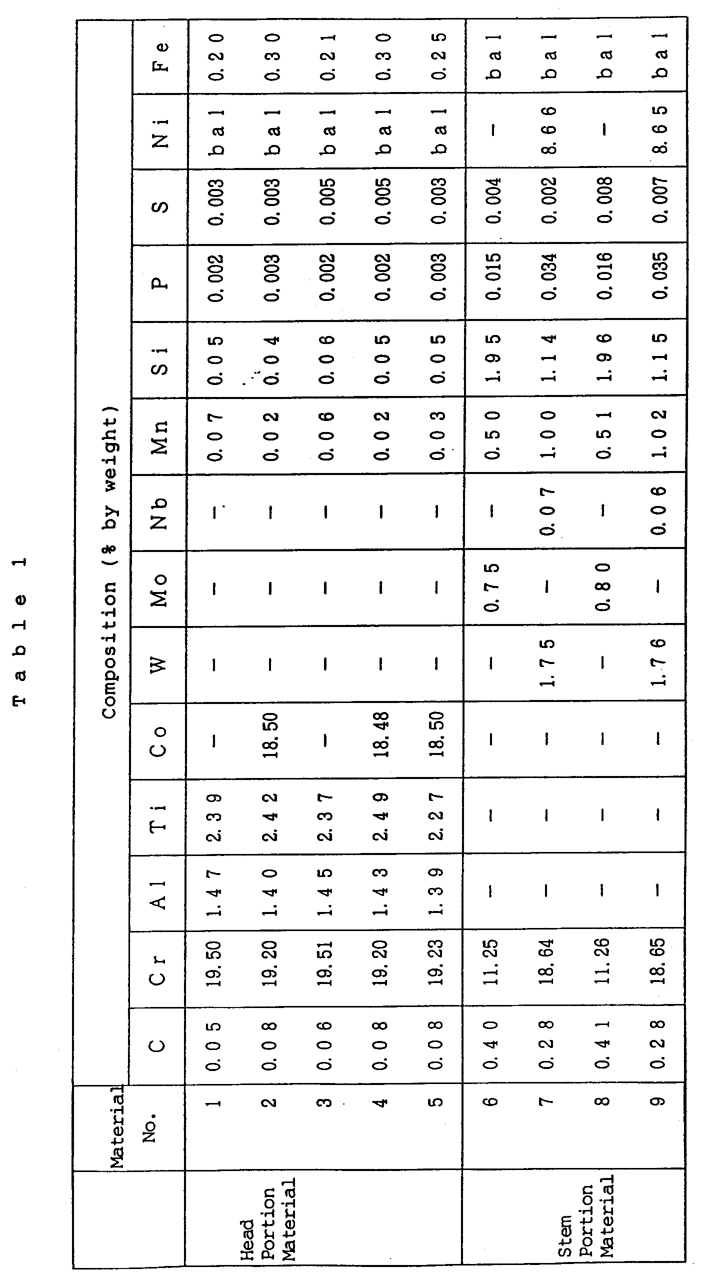

In both of the embodiment and the comparative example, round rods (hereinafter referred to as head and stem portions) of the same material having a diameter of D mm were actually used in place of the head portion 12 and the stem portion 14, individually. In cases, moreover, the head portion was fixed on a stationary base of a friction welding apparatus, and the stem portion was held by means of a spindle, with the respective axes of the head and stem portions in alignment with each other. The spindle can rotate the stem portion in a manner such that the stem portion is pressed against the head portion. The rotating speed of the stem portion and the pressure are adjustable. In both of the embodiment and the comparative example, the rotating speed of the stem portion in the heating stage was fixed to 400 rpm. The first pressure P1 for the heating stage, heating time t1, and margin u1 for plastic conversion were changed variously as shown in Table 2. Also, the second pressure P2 for the upsetting stage, ratio P2/P1, margin u2 for plastic conversion, and upsetting time t2 were changed as shown in Table 2.

Ten friction-welded valves were prepared on the individual conditions as shown in Table 2, and test pieces were cut individually from the central and surface portions of each valve, and were subjected to a tension test provided by JIS Z2241, whereby the respective fracture strengths of the test pieces were determined. When the obtained values were equal to or higher than that of the fracture strength of the base material (heat-resisting steel in this case) which involved positions of fracture, it was concluded that the fracture was a base material fracture. When the positions of fracture were at the joint interface, it was concluded that the fracture was a joint fracture. In Table 2, circles indicate cases where all of the test pieces cut from the central and surface portions of the joint portion were subject to the base material fracture. Triangles indicate cases where the test pieces cut from the central portion were subject to the joint fracture. Squares indicate cases where the test pieces cut from the surface portion were subject to the joint fracture. Crosses indicate cases where all of the test pieces cut from the central and surface portions were subject to the joint fracture.

In fracture tests for the individual test pieces, the incidence (%) of the joint fracture was calculated. Table 2 also shows the result of this calculation.

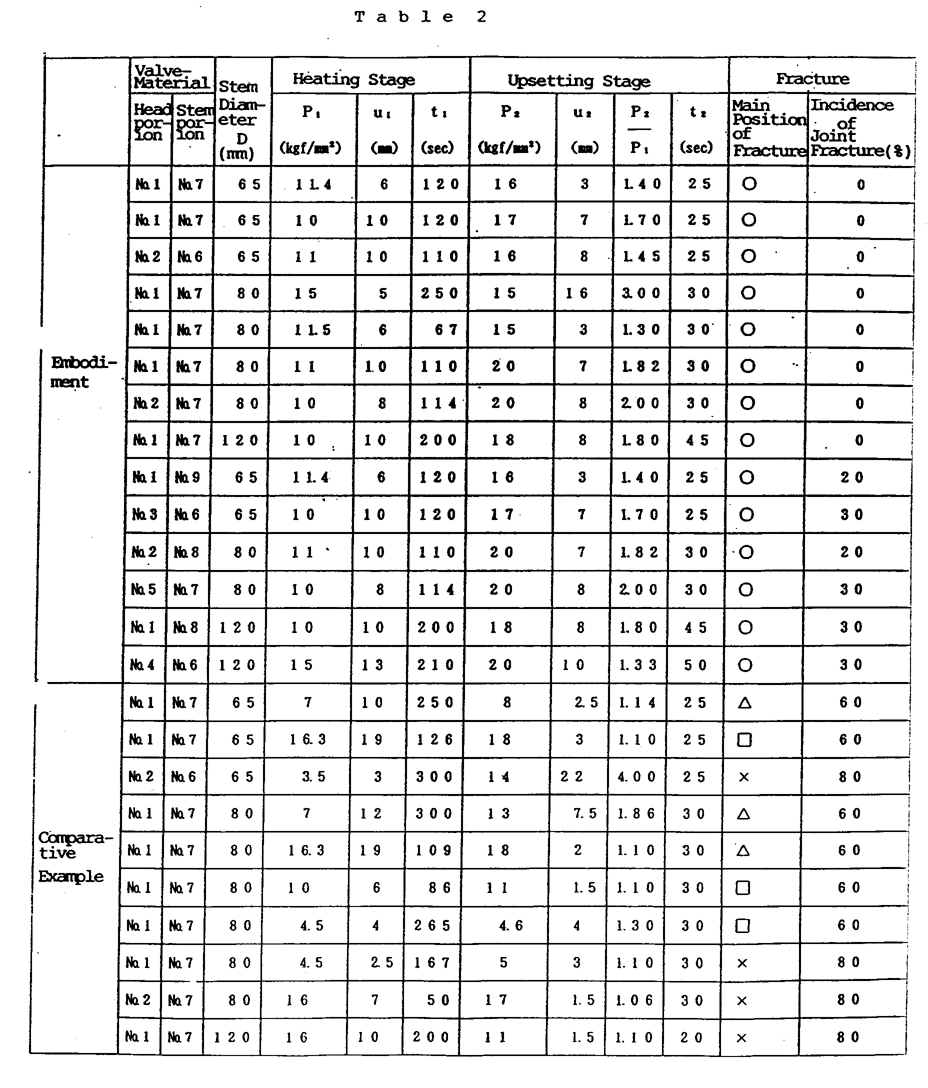

### [Embodiment 2]

Pipes of the configurations shown in Table 3 were prepared by cutting stem portion materials Nos. 6 and 7 used in Example 1. Friction welding was carried out under the conditions shown in Table 3 using these pipes for stem portions and materials Nos. 1 and 2 of Table 1 for head portions. Thereupon, friction-welded valves with hollow stem portions were manufactured.

Twenty friction-welded valves were prepared on the individual conditions, and test pieces were cut from the substantially central regions of thick portions of the individual valves and subjected to fracture tests similar to those conducted in connection with Embodiment 1. Table 3 shows the results of the tests.

In Table 3, circles indicate cases where all of the test pieces were subject to the base material fracture, and squares indicate cases where the test pieces were subject to the joint fracture.

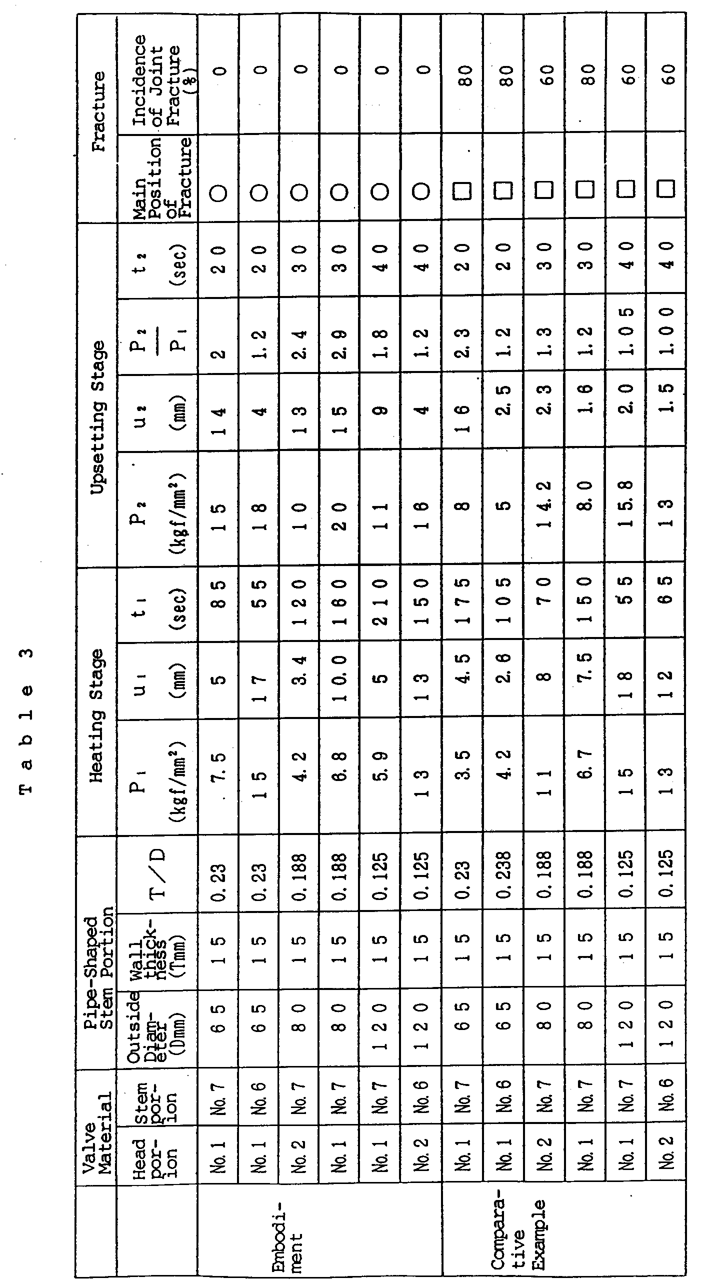

## Claims

1. A method for manufacturing a friction-welded valve, comprising:
relatively rotating a head portion, formed of a nickel-based alloy containing 0.20% or less of carbon, 18 to 30% of chromium, 0.5 to 2.5% of aluminum, and 1.0 to 3.0% of titanium, all by weight, as essential components, and a stem portion, formed of a heat-resisting steel containing 0.5% or less of carbon and 10 to 30% of chromium, both by weight, as essential components, under a first pressure P1;
heating a joint portion by means of frictional heat generated by the rotation so that the margin for plastic conversion becomes 5 mm or more;
stopping the relative rotation; and
pressing and upsetting the head portion and the stem portion by means of a second pressure P2 so that the margin for plastic conversion becomes 2 mm or more,
the stem portion being a solid body with an outside diameter of more than 40 mm, and
the first pressure P1, the second pressure P2, and the ratio P2/P1 of the second pressure P2 to the first pressure P1 being set at 39.22 MPa (4 kgf/mm²) or more, 137.29 MPa (14 kgf/mm²) or more and 1.25 or more, respectively.

2. A method for manufacturing a friction-welded valve as claimed in claim 1, wherein the nickel-based alloy of said head portion further contains at least one optional component selected from a group of elements including 22% or less of cobalt, 5% or less of niobium, 5% or less of tungsten, 5% or less of molybdenum, and 20% or less of iron, all by weight.

3. A method as claimed in claim 1 or claim 2, wherein impurities contained in the nickel-based alloy of said head portion include 0.010% or less of phosphorus, 0.003% or less of sulfur, and 0.20% or less of silicon, all by weight.

4. A method as claimed in any one of the preceding claims, wherein the heat-resisting steel of said stem portion further contains at least one optional component selected from a group of elements including 2% or less of molybdenum, 18% or less of nickel, 3% or less of tungsten, and 2% or less of niobium, all by weight.

5. A method as claimed in any one of the preceding claims, wherein impurities contained in the heat-resisting steel of said stem portion include 0.010% or less of phosphorus and 0.003% or less of sulfur, both by weight.

6. A method for manufacturing a friction-welded valve, comprising:
relatively rotating a head portion, formed of a nickel-based alloy containing 0.20% or less of carbon, 18 to 30% of chromium, 0.5 to 2.5% of aluminum, and 1.0 to 3.0% of titanium, all by weight, as essential components, and a stem portion, formed of a heat-resisting steel containing 0.5% or less of carbon and 10 to 30% of chromium, both by weight, as essential components, under a first pressure P1;
heating a joint portion by means of frictional heat generated by the rotation so that the margin for plastic conversion becomes 3 mm or more;
stopping the relative rotation; and
pressing and upsetting the head portion and the stem portion by means of a second pressure P2 so that the margin for plastic conversion becomes 2 mm or more,
the stem portion being a pipe with an outside diameter of more than 40 mm, and wall-thickness-to-outside-diameter ratio of 0.1 to 0.3, and
the first pressure P1, the second pressure P2, and the ratio P2/P1 of the second pressure P2 to the first pressure P1 being set at 39.22 MPa (4 kgf/mm²) or more, 98.06 MPa (10 kgf/mm²) or more and 1.10 or more, respectively.

7. A method for manufacturing a friction-welded valve as claimed in claim 6, wherein the nickel-based alloy of said head portion further contains at least one optional component selected from a group of elements including 22% or less of cobalt, 7% or less of niobium, 7% or less of tungsten, 7% or less of molybdenum, and 20% or less of iron, all by weight.

8. A method as claimed in claim 6 or claim 7, wherein impurities contained in the nickel-based alloy of said head portion include 0.010% or less of phosphorus, 0.003% or less of sulfur, and 0.20% or less of silicon, all by weight.

9. A method as claimed in any one of claims 6 to 8, wherein the heat-resisting steel of said stem portion further contains at least one optional component selected from a group of elements including 2% or less of molybdenum, 18% or less of nickel, 3% or less of tungsten, and 2% or less of niobium, all by weight.

10. A method as claimed in any one of claims 6 to 9, wherein impurities contained in the heat-resisting steel of said stem portion include 0.010% or less of phosphorus and 0.003% or less of sulfur, both by weight.

## Patentansprüche

1. Verfahren zum Herstellen eines reibungsverschweißten Ventils, wobei
- ein Kopfabschnitt aus einer Legierung auf Nickel-Basis enthaltend 0,20 % oder weniger Kohlenstoff, 18 bis 30 % Chrom, 0,5 bis 2,5 % Aluminium und 1,0 bis 3,0 % Titan jeweils in Gewichtsprozent als wesentliche Bestandteile unter einem ersten Druck P1 relativ zu einem Schaftabschnitt verdreht wird, der aus einem wärmebeständigen Stahl gebildet ist, enthaltend 0,5 % oder weniger Kohlenstoff und 10 bis 30 % Chrom jeweils in Gewichtsprozent als wesentliche Bestandteile,
- ein Verbindungsabschnitt mittels Reibungswärme erwärmt wird, die durch Verdrehen erzeugt wird, so daß der Randbereich für die plastische Umwandlung 5 mm oder mehr wird,
- die Relativverdrehung angehalten wird, und
- der Kopfabschnitt und der Schaftabschnitt bei einem zweiten Druck P2 aneinander gedrückt und gestaucht werden, derart, daß der Randbereich für die plastische Umwandlung 2 mm oder mehr wird,
- wobei der Schaftabschnitt ein fester Körper mit einem Außendurchmesser von mehr als 40 mm ist und
- der erste Druck P1, der zweite Druck P2 und das Verhältnis P2/P1 des zweiten Drucks P2 zum ersten Druck P1 auf 39,22 MPa (4 kgf/mm²) oder mehr, 137,29 MPa (14 kgf/mm²) oder mehr bzw. 1,25 oder mehr eingestellt wird.

2. Verfahren zum Herstellen eines reibungsverschweißten Ventils nach Anspruch 1, wobei die Legierung auf Nickel-Basis des Kopfabschnitts weiterhin wenigstens einen wahlweisen Bestandteil enthält, die aus einer Gruppe von Elementen ausgewählt ist, die 22 % oder weniger Kobalt, 5 % oder weniger Niobium, 5 % oder weniger Wolfram, 5% oder weniger Molybden und 20 % oder weniger Eisen jeweils in Gewichtsprozent umfaßt.

3. Verfahren nach Anspruch 1 oder 2, wobei Verunreinigungen in der Legierung auf Nickel-Basis des Kopfabschnitts 0,010 % oder weniger Phosphor, 0,003 % oder weniger Schwefel und 0,20 % oder weniger Silizium jeweils in Gewichtsprozent umfassen.

4. Verfahren nach einem der vorhergehenden Ansprüche, wobei der wärmebeständige Stahl des Schaftabschnitts weiterhin wenigstens einen wahlweisen Bestandteil enthält, der aus einer Gruppe von Elementen ausgewählt ist, die 2 % oder weniger Molybden, 18 % oder weniger Nickel, 3 % oder weniger Wolfram und 2 % oder weniger Niobium jeweils in Gewichtsprozent umfaßt.

5. Verfahren nach einem der vorhergehenden Ansprüche, wobei Verunreinigungen in dem wärmebeständigen Stahl des Schaftabschnitts 0,010 % oder weniger Phosphor und 0,003 % oder weniger Schwefel jeweils in Gewichtsprozent umfaßt.

6. Verfahren zum Herstellen eines reibungsverschweißten Ventils, umfassend:
- relatives Verdrehen eines Kopfabschnitts aus einer Legierung auf Nickel-Basis, die 0,20 % oder weniger Kohlenstoff, 18 bis 30 % Chrom, 0,5 bis 2,5 % Aluminium und 1,0 bis 3,0 % Titan jeweils in Gewichtsprozent als wesentliche Bestandteile enthält, und eines Schaftabschnitts aus einem wärmebeständigen Stahl, der 0,5 % oder weniger Kohlenstoff und 10 bis 30 % Chrom jeweils in Gewichtsprozent als wesentliche Bestandteile enthält, unter einem ersten Druck P1,
- Erwärmen eines Verbindungsabschnitts durch Reibungswärme, die durch die Verdrehung erzeugt wird, so daß der Randbereich für die plastische Umwandlung 3 mm oder mehr wird,
- Anhalten der Relativverdrehung, und
- Zusammendrücken und Stauchen des Kopfabschnitts und des Schaftabschnitts mittels eines zweiten Drucks P2 derart, daß der Randbereich für die plastische Umwandlung 2 mm oder mehr wird,
- wobei der Schaftabschnitt ein Rohr mit einem Außendurchmesser von mehr als 40 mm und das Verhältnis der Wandstärke zum Außendurchmesser 0,1 bis 0,3 ist und
- der erste Druck P1, der zweite Druck P2 und das Verhältnis P2/P1 des zweiten Drucks P2 zum ersten Druck P1 auf 39,22 MPa (4 kgf/mm²) oder mehr, 98,06 MPa (10 kgf/mm²) oder mehr bzw. 1,10 oder mehr eingestellt wird.

7. Verfahren zum Herstellen eines reibungsverschweißten Ventils nach Anspruch 6, wobei die Legierung auf Nickel-Basis des Kopfabschnitts weiterhin wenigstens einen wahlweisen Bestandteil enthält, der aus einer Gruppe von Elementen ausgewählt ist, die 22 % oder weniger Kobalt, 7 % oder weniger Niobium, 7 % oder weniger Wolfram, 7 % oder weniger Molybden und 20 % oder weniger Eisen jeweils in Gewichtsprozent umfaßt.

8. Verfahren nach Anspruch 6 oder 7, wobei Verunreinigungen in der Legierung auf Nickel-Basis des Kopfabschnitts 0,010 % oder weniger Phosphor, 0,003 % oder weniger Schwefel und 0,20 % oder weniger Silizium jeweils in Gewichtsprozent umfassen.

9. Verfahren nach einem der Ansprüche 6 bis 8, wobei der wärmebeständige Stahl des Schaftabschnitts weiterhin wenigstens einen wahlweisen Bestandteil enthält, der aus einer Gruppe von Elementen ausgewählt ist, die 2 % oder weniger Molybden, 18 % oder weniger Nickel, 3 % oder weniger Wolfram und 2 % oder weniger Niobium jeweils in Gewichtsprozent umfaßt.

10. Verfahren nach einem der Ansprüche 6 bis 9, wobei Verunreinigungen in dem wärmebeständigen Stahl des Schaftabschnitts 0,010 % oder weniger Phosphor und 0,003 % oder weniger Schwefel jeweils in Gewichtsprozent umfassen.

## Revendications

1. Procédé de fabrication d'une soupape soudée par friction comprenant :
la rotation relative d'une partie de tête formée d'un alliage à base de nickel contenant 0,20 % ou moins de carbone, 18 à 30 % de chrome, 0,5 à 2,5 % d'aluminium, et 1,0 à 3,0 % de titane, tous en poids, comme composants essentiels et une partie de tige, formée d'un acier résistant à la chaleur contenant 0,5 % ou moins de carbone et 10 à 30 % de chrome, tous deux en poids, comme composants essentiels, sous une première pression P1 ;
le chauffage d'une partie de joint au moyen de la chaleur de friction engendrée par la rotation de sorte que la marge de conversion plastique devienne de 5 mm ou plus ;
l'arrêt de la rotation relative ; et
le pressage et l'écrasement de la portie de tête et de la portie de tige au moyen d'une seconde pression P2 de sorte que la marge de conversion plastique devienne de 2 mm ou plus,
la partie de tige étant un corps solide avec un diamètre extérieur de plus de 40 mm et
la première pression P1, la seconde pression P2 et le rapport P2/P1 de la seconde pression P2 à la première pression P1 étant fixés à 39,22 MPa (4 kgf/mm²) ou plus, 137,29 MPa (14 kgf/mm²) ou plus et 1,25 ou plus, respectivement.

2. Procédé de fabrication d'un soupape soudée par friction selon la revendication 1, dans lequel l'alliage à base de nickel de ladite partie de tête contient en outre au moins un composé optionnel sélectionné dans un groupe d'éléments incluant 22 % ou moins de cobalt, 5 % ou moins de niobium, 5 % ou moins de tungstène, 5 % ou moins de molybdène et 20 % ou moins de fer, tous en poids.

3. Procédé selon la revendication 1 ou 2, dans lequel des impuretés contenues dans l'alliage à base de nickel de ladite partie de tête incluent 0,010 % ou moins de phosphore, 0,003 % ou moins de soufre, et 0,20 % ou moins de silicium, tous en poids.

4. Procédé selon l'une quelconque des revendications précédentes, dans lequel l'acier résistant à la chaleur de ladite partie de tige contient en outre au moins un composant optionnel sélectionné dans un groupe d'éléments incluant 2 % ou moins de molybdène, 18 % ou moins de nickel, 3 % ou moins de tungstène, et 2 % ou moins de niobium, tous en poids.

5. Procédé selon l'une quelconque des revendications précédentes, dans lequel des impuretés contenues dans l'acier résistant à la chaleur de ladite partie de tige incluent 0,010 % ou moins de phosphore et 0,003 % ou moins de soufre, tous deux en poids.

6. Procédé de fabrication d'une soupape soudée par friction comprenant :
la rotation relative d'une partie de tête formée d'un alliage à base de nickel contenant 0,20 % ou moins de carbone, 18 à 30 % de chrome, 0,5 à 2,5 % d'aluminium, et 1,0 à 3,0 % de titane, tous en poids, comme composants essentiels et une partie de tige, formée d'un acier résistant à la chaleur contenant 0,5 % ou moins de carbone et 10 à 30 % de chrome, tous deux en poids, comme composants essentiels, sous une première pression P1 ;
le chauffage d'une partie de joint au moyen de la chaleur de friction engendrée par la rotation de sorte que la marge de conversion plastique devienne de 3 mm ou plus ;
l'arrêt de la rotation relative ; et
le pressage et l'écrasement de la portie de tête et de la portie de tige au moyen d'une seconde pression P2 de sorte que la marge de conversion plastique devienne de 2 mm ou plus,
la partie de tige étant un tube avec un diamètre extérieur de plus de 40 mm et un rapport épaisseur de paroi à diamètre extérieur de 0,1 à 0,3, et
la première pression P1, la seconde pression P2 et le rapport P2/P1 de la seconde pression P2 à la première pression P1 étant fixés à 39,22 MPa (4 kgf/mm²) ou plus, 98,06 MPa (10 kgf/mm²) ou plus et 1,10 ou plus, respectivement.

7. Procédé de fabrication d'un soupape soudée par friction selon la revendication 6, dans lequel l'alliage à base de nickel de ladite partie de tête contient en outre au moins un composé optionnel sélectionné dans un groupe d'éléments incluant 22 % ou moins de cobalt, 7 % ou moins de niobium, 7 % ou moins de tungstène, 7 % ou moins de molybdène et 20 % ou moins de fer, tous en poids.

8. Procédé selon la revendication 6 ou 7, dans lequel des impuretés contenues dans l'alliage à base de nickel de ladite partie de tête incluent 0,010 % ou moins de phosphore, 0,003 % ou moins de soufre, et 0,20 % ou moins de silicium, tous en poids.

9. Procédé selon l'une quelconque des revendications 6 à 8, dans lequel l'acier résistant à la chaleur de ladite partie de tige contient en outre au moins un composant optionnel sélectionné dans un groupe d'éléments incluant 2 % ou moins de molybdène, 18 % ou moins de nickel, 3 % ou moins de tungstène, et 2 % ou moins de niobium, tous en poids.

10. Procédé selon l'une quelconque des revendications 6 à 9, dans lequel des impuretés contenues dans l'acier résistant à la chaleur de ladite partie de tige incluent 0,010 % ou moins de phosphore et 0,003 % ou moins de soufre, tous deux en poids.
